# EUROPEAN PATENT APPLICATION

(11) **EP 4 793 654 A1**
(43) Date of publication of application: **19.08.2026**
(21) Application number: 25157390.3
(22) Date of filing: 12.02.2025
(51) Int. Cl.: G01S 7/03, G01S 7/35, G01S 7/40, G01S 7/42, G01S 13/34, G01S 13/87

(54) **CENTRAL UNITS FOR RADAR SYSTEMS**

(71) Applicant: Xavveo GmbH, 13355 Berlin (DE)
(72) Inventor: MEISTER, Stefan, 12587 Berlin (DE); KEIL, Ulrich, 12249 Berlin (DE)
(74) Representative: Fischer, Uwe

(57) **Abstract**

An exemplary embodiment of the present invention relates to a central unit (300) for a radar system (10), the central unit (300) being configured to be connected to a plurality of radar transmission units (100) and a plurality of radar reception units (200), wherein the central unit (300) comprises an electro-optical modulator (MZI, MZI1, MZI2), an optical emitter (E1, E2), and an electrical signal generator (SG), wherein the electrical signal generator (SG) is configured to generate an electrical ramp signal (RS) that controls the electro-optical modulator (MZI, MZI1, MZI2) and serves as a radar driver signal (RDS) for the radar transmission units (100) and a radar reference signal (RRS) for the radar reception units (200), wherein the frequency of the periodic electrical ramp signal (RS) continuously increases or decreases over time at least during an active segment of each periodic cycle, wherein in response to the ramp signal (RS) the electro-optical modulator (MZI, MZI1, MZI2) modulates radiation of the optical emitter (E1, E2), thereby incorporating the ramp signal (RS) into the optical radiation and outputting modulated optical radiation, wherein the central unit (300) further comprises a replacement emitter (R1, R2), a monitor detector coupled to an output port of the electro-optical modulator (MZI, MZI1, MZI2), and a control unit (CU), and wherein the control unit (CU) is configured to evaluate the monitor signal from the monitor detector and to replace the optical emitter (E1, E2) with the replacement emitter (R1, R2) based on the result of the evaluation.

## Description

The present invention relates to radar systems and central units for radar systems.

### Background of the invention

German Patent DE 10 2022 201 312 B4 discloses a radar system that comprises a central unit. The central unit is configured to be connected to a plurality of radar transmission units and a plurality of radar reception units. The central unit comprises an electro-optical modulator, an optical emitter, and an electrical signal generator.

### Objective of the present invention

An objective of the present invention is to propose central units and radar systems with such central units with increased operational reliability.

### Brief summary of the invention

An exemplary embodiment of the present invention relates to a central unit for a radar system, the central unit being configured to be connected to a plurality of radar transmission units and a plurality of radar reception units,
wherein the central unit comprises an electro-optical modulator, an optical emitter, and an electrical signal generator,
wherein the electrical signal generator is configured to generate an electrical ramp signal that controls the electro-optical modulator and serves as a radar driver signal for the radar transmission units and a radar reference signal for the radar reception units,
wherein the frequency of the periodic electrical ramp signal continuously increases or decreases over time at least during an active segment of each periodic cycle,
wherein in response to the ramp signal the electro-optical modulator modulates radiation of the optical emitter, thereby incorporating the ramp signal into the optical radiation and outputting modulated optical radiation,
wherein the central unit further comprises a replacement emitter, a monitor detector coupled to an output port of the electro-optical modulator, and a control unit, and
wherein the control unit is configured to evaluate the monitor signal from the monitor detector and to replace the optical emitter with the replacement emitter based on the result of the evaluation.

The central unit according to the present invention provides increased operational reliability compared to prior art solutions, as a failing optical emitter can be automatically replaced by a backup (replacement) emitter.

Another aspect of the claimed invention is the monitoring of optical radiation. Since this monitoring is performed downstream of the electro-optical modulator, failures of additional components related to the optical emitter are also accounted for in the replacement process. For instance, if the optical connection between the optical emitter and the electro-optical modulator is interrupted, replacing the optical emitter may also replace the broken connection.

Furthermore, since the monitoring of optical radiation is carried out downstream of the electro-optical modulator, monitor detectors used to control the operational point of the electro-optical modulator can also be used for failure detection. This enables failure monitoring without requiring additional optical detectors.

Each of the optical emitters and each of the replacement emitters is preferably connected to their assigned electro-optical modulator via an individual optical connection. If any of these individual optical connections is broken or disconnected from their emitter or downstream components, the control unit may replace the concerned connections by replacing the respective emitters.

The radar system may be a FMCW- (Frequency Modulated Continuous Wave) radar system. The central unit may be configured to evaluate a frequency shift between emitted radar radiation and received radar radiation, in order to determine distances and/or speed.

The monitor detector may be tap-coupled to the output port.

The term tap-coupled refers to a type of optical or electromagnetic coupling where a portion of the radiation (or energy) in a waveguide, fiber, or resonator is deliberately extracted ("tapped") and diverted for detection, measurement, or other purposes. The remaining portion of the energy continues along the original transmission path. This principle is widely used in telecommunications, sensing, and photonic devices.

Preferably the control unit replaces the optical emitter with the replacement emitter by deactivating the optical emitter and activating the replacement emitter.

The electro-optical modulator is preferably a Mach-Zehnder modulator having a first optical input port coupled to the optical emitter, a second optical input port coupled to the replacement emitter, a first optical output port that outputs a first modulated optical output signal, and a second output port that outputs a second modulated optical output signal, wherein the first and second modulated optical output signal are complementary to each other.

A first monitor detector may monitor the first modulated optical output signal and generate a first monitor signal.

A second monitor detector may monitor the second modulated optical output signal and generate a second monitor signal.

The control unit may be configured to evaluate the first and second monitor signal and to replace the optical emitter with the replacement emitter if the sum of the amplitudes of the monitor signals is below a given threshold.

The first monitor detector may be tap-coupled to the first optical output port.

The second monitor detector may be tap-coupled to the second optical output port. Alternatively, the second monitor detector may form an optical sink at the second optical output port.

The control unit may also be configured to adjust the operational point of the Mach-Zehnder modulator on the basis of the monitor signals. Alternatively, a second control unit of the central unit may be configured to adjust the operational point of the Mach-Zehnder modulator on the basis of the monitor signals.

The operational point of the Mach-Zehnder modulator may be the quadrature point. Alternatively, the operational point of the Mach-Zehnder modulator may be the constructive interference point or the destructive interference point. In the former case, the Mach-Zehnder modulator is preferably operated as an amplitude modulator. In the latter case, the Mach-Zehnder modulator is preferably operated as a phase modulator.

The central unit may comprise a plurality of optical emitters, each of which is preferably individually assigned to one or more electro-optical modulators.

Each electro-optical modulator may be assigned at least one individually monitor detector that monitors an output port of the respective electro-optical modulator and generates a monitor signal.

The replacement emitter may be a single replacement emitter and assigned to said plurality of optical emitters, and the control unit may be configured to evaluate the monitor signals from the monitor detectors and to replace anyone of the optical emitters of said plurality of optical emitters with the replacement emitter if the monitor signals that refer to the respective optical emitter, meet a given replacement condition.

Alternatively, the central unit may comprise a plurality of replacement emitters, and the control unit may be configured to evaluate the monitor signals from the monitor detectors and to replace each of the optical emitters of said plurality of optical emitters with any of said plurality of replacement emitters if the monitor signals that refer to the respective optical emitter, meet a given replacement condition and an unused replacement emitter is still available.

One or at least one replacement emitter of a plurality of replacement emitters may be assigned to each optical emitter, and the control unit may be configured to evaluate the monitor signals from the monitor detectors and to replace each of the optical emitters with their assigned replacement emitter if the monitor signals that refer to the respective optical emitter, meet a given replacement condition.

For instance, one replacement emitter may be assigned to each optical emitter thereby forming pairs each of which comprises an optical emitter and its individually assigned replacement emitter.

The control unit may be configured to evaluate the monitor signals from the monitor detectors and to replace each replacement emitter with another replacement emitter if the monitor signals that refer to the former replacement emitter, meet a given replacement condition. In other words, replacement (backup) emitters may also replace replacement (backup) emitters.

Each of the electro-optical modulators may be a Mach-Zehnder modulator having a first optical input port coupled to its assigned optical emitter, a second input port coupled to one or more replacement emitters, and a second output that outputs a second modulated optical output signal, wherein the first modulated optical output signal of each electro-optical modulator is complementary to the second modulated optical output signal of the respective electro-optical modulator.

The term "coupled" refers to a direct connection between components as well as an indirect connection between the components via switches and/or further components like waveguides, attenuators or filters.

To each of the electro-optical modulators may be assigned a first monitor detector that monitors the first modulated optical output signal of the respective electro-optical modulator and generates a first monitor signal with respect to the respective electro-optical modulator, and a second monitor detector that monitors the second modulated optical output signal of the respective electro-optical modulator and generates a second monitor signal with respect to the respective electro-optical modulator.

Each first monitor detector or at least one of them may be tap-coupled to the first optical output port of the respective electro-optical modulator.

Each second monitor detector or at least one of them may be tap-coupled to the second optical output port of the respective electro-optical modulator. Alternatively, each second monitor detector or at least one of them may form an optical sink at the second optical output port.

The control unit may be configured to evaluate the first and second monitor signals of each electro-optical modulator and to replace one or more of the optical emitters with their assigned replacement emitter if the sum of the amplitudes of the monitor signals of the respective optical emitter is below a given threshold.

The optical modulator may be an amplitude modulator or a phase modulator.

Another exemplary embodiment of the present invention relates to a radar system comprising a plurality of radar transmission units, a plurality of radar reception units, and a central unit which is optically connected to the radar transmission units and the radar reception units. According to the invention, the central unit is a central unit as described above.

The radar system may be a FMCW- (Frequency Modulated Continuous Wave) radar system. The central unit may be configured to evaluate a frequency shift between emitted radar radiation and received radar radiation, in order to determine distances and/or speed.

### Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which
- Figure 1: depicts an exemplary embodiment of a radar system according to the present invention, the radar system comprising an exemplary embodiment of a control unit according to the present invention,
- Figure 2: depicts an exemplary embodiment of a modulation signal that may serve as a radar driver signal and a radar reference signal,
- Figure 3: depicts modulated optical output signals that are complementary to each other, and
- Fig. 4-10: depict further exemplary embodiments of radar systems and central units according to the present invention.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

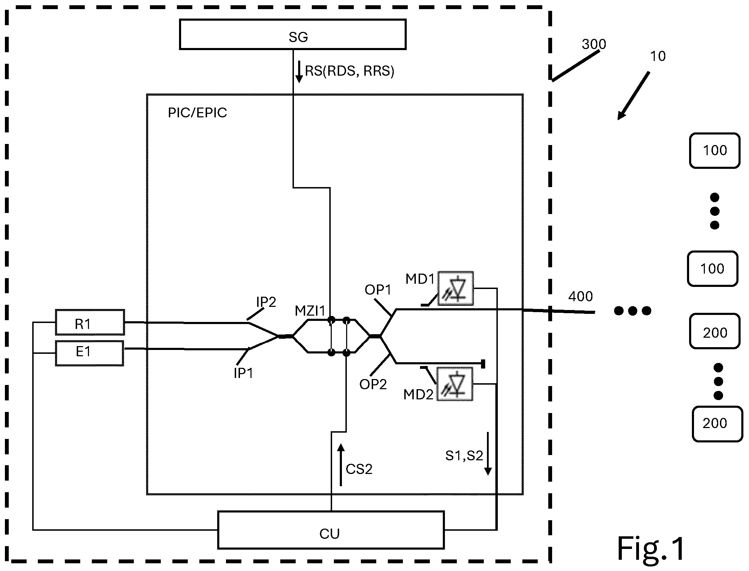

Figure 1 depicts a radar system 10 that comprises radar transmission units 100 and radar reception units 200 as well as a central unit 300 according to a first exemplary embodiment of the invention. The radar system 10 may be a FMCW- (Frequency Modulated Continuous Wave) radar system and may evaluate a frequency shift between emitted radar radiation and received radar radiation.

The central unit 300 is configured to be connected to the transmission and reception units 200 and 300, e. g. via optical waveguides 400 such as optical fibers.

The central unit 300 comprises an electro-optical modulator MZI1, an optical emitter E1 that is configured to generate optical radiation during operation, a replacement emitter R1 that is also configured to generate optical radiation during operation, an electrical signal generator SG, a first monitor detector MD1 and a second monitor detector MD2 coupled to output ports OP1 and OP2 of the electro-optical modulator MZI1, and a control unit CU.

The electrical signal generator SG is configured to generate an electrical ramp signal RS that controls the electro-optical modulator MZI1 and serves as a radar driver signal RDS for the radar transmission units 100 and a radar reference signal RRS for the radar reception units 200. The electrical ramp signal RS preferably has a constant amplitude and a varying frequency. The frequency of the electrical modulation signal may be in the range between 19 and 21 GHz.

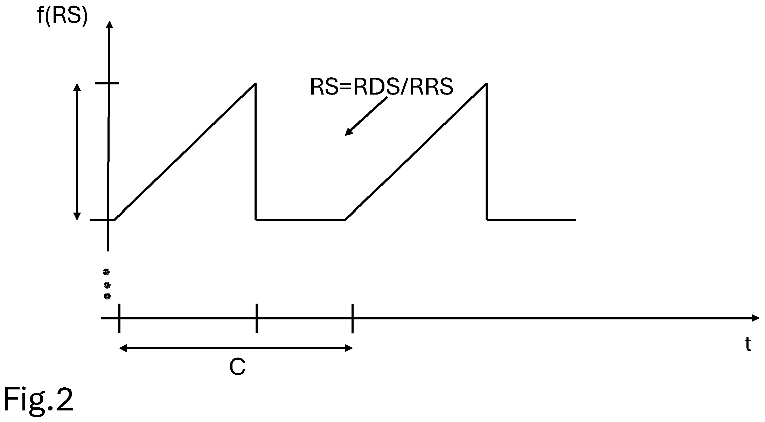

An exemplary embodiment of an electrical ramp signal RS that the electrical signal generator SG may generate, is shown in Figure 2. The frequency f of the periodic electrical ramp signal RS continuously increases or decreases over time t at least during an active segment of each periodic cycle C. In response to the ramp signal RS the electro-optical modulator MZI1 modulates radiation of the optical emitter E1, thereby incorporating the ramp signal RS into the optical radiation and outputting modulated optical radiation.

In the exemplary embodiment of Figure 1, the electro-optical modulator MZI1 is a Mach-Zehnder modulator. The Mach-Zehnder modulator MZI1 comprises a first optical input port IP1 that is coupled to the optical emitter E1, a second optical input port IP2 that is coupled to the replacement emitter R1, a first optical output port OP1 that outputs a first modulated optical output signal, and a second output port OP2 that outputs a second modulated optical output signal. The first and second modulated optical output signal are complementary to each other.

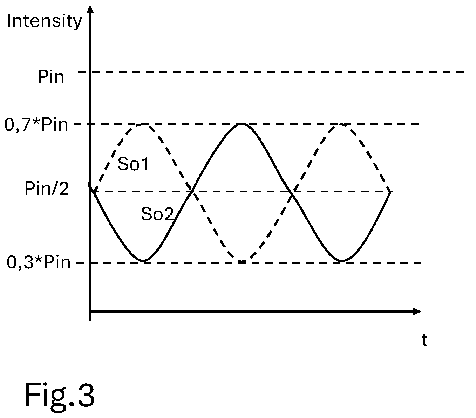

Figure 3 illustrates the first modulated optical output signal So1 and the second modulated optical output signal So2 in response to a sinusoidal electrical modulation signal. The modulated optical output signals So1 and So2 exhibit amplitude complementarity: as the intensity of one optical signal increases, the intensity of the other decreases, thereby maintaining a balance or specific total energy. In Figure 3, the sum of the intensities of the modulated optical output signals So1 and So2 equals the intensity of the input radiation Pin (assuming negligible optical losses), resulting in a constant total intensity. In Figure 3, the Mach-Zehnder modulator MZI1 is operated in its quadrature point.

The first monitor detector MD1 monitors the first modulated optical output signal and generates a first monitor signal S1. The second monitor detector MD2 monitors the second modulated optical output signal and generates a second monitor signal S2.

The control unit CU is configured to evaluate the monitor signals S1 and S2 from the monitor detectors MD1 and MD2 and to replace the optical emitter E1 with the replacement emitter R1 based on the result of the evaluation. In other words, as long as the optical modulator E1 is operating, the replacement emitter R1 is idle and switched off. If the replacement emitter R1 is active, the optical emitter E1 is idle and switched off.

Preferably the control unit CU replaces the optical emitter E1 with the replacement emitter R1 if the sum of the amplitudes of the monitor signals S1 and S2 is below a given threshold. The control unit CU may replace the optical emitter E1 with the replacement emitter R1 by deactivating the optical emitter E1 and activating the replacement emitter R1.

In the exemplary embodiment of Figure 1, the first monitor detector MD1 is tap-coupled to the first optical output port OP1 of the Mach-Zehnder modulator MZI1, and the second monitor detector MD2 is tap-coupled to the second optical output port OP2 of the Mach-Zehnder modulator MZI1. The term tap-coupled refers to a type of optical or electromagnetic coupling where a portion of the radiation (or energy) is deliberately extracted ("tapped") and diverted for detection. The remaining portion of the energy continues along the original transmission path.

The first optical output port OP1 of the Mach-Zehnder modulator MZI1 may form an output port of the central unit 300 that may be connected to all of the transmission and/or reception units 200/300 that are shown in Figure 1, or to a first subgroup of these transmission and/or reception units 200/300.

In Figure 1, the second optical output port OP2 of the Mach-Zehnder modulator MZI1 is connected to an optical sink. Alternatively, the second optical output port OP2 of the Mach-Zehnder modulator MZI1 may be connected to a second subgroup of the transmission and/or reception units 200/300 that are shown in Figure 1.

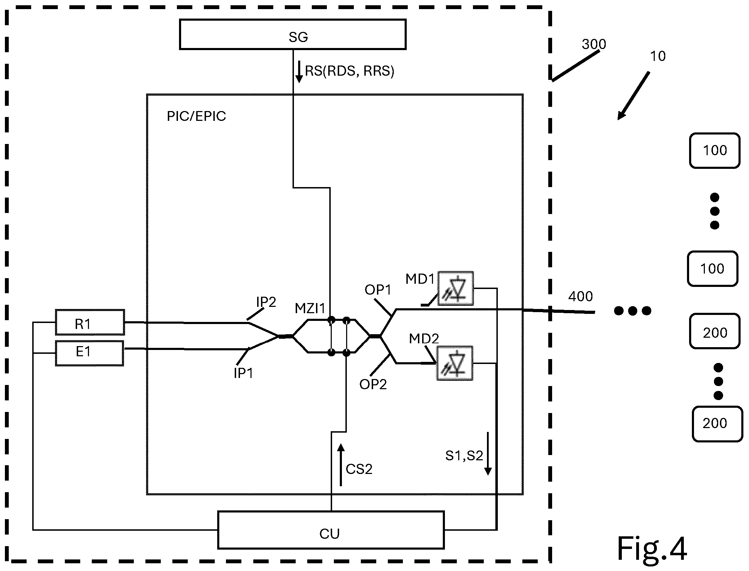

Alternatively, the second monitor detector MD2 itself may form the optical sink as shown in Figure 4.

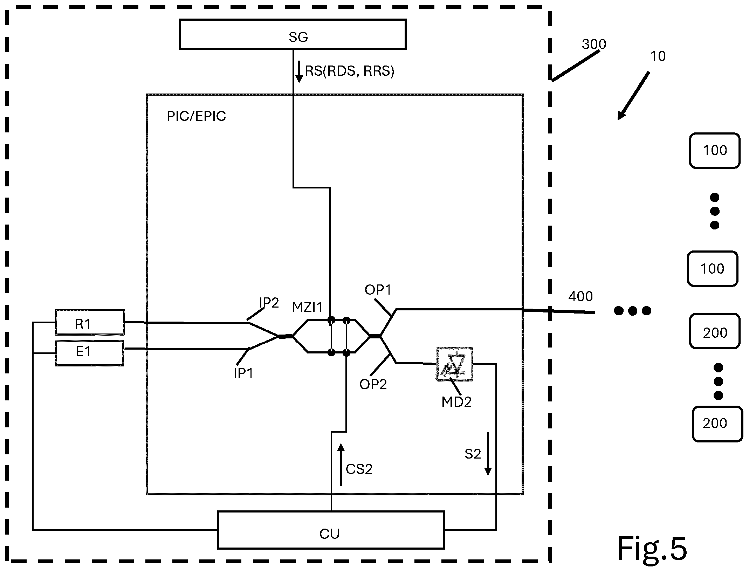

Furthermore, the first monitor detector MD1 may be omitted as shown in Figure 5. In the latter case, the control unit CU may decide about replacing the optical emitter E1 with the replacement emitter R1 only on the basis of the second monitor signal S2 from the second monitor detector MD2.

The control unit CU may be further configured to evaluate the monitor signals S1 and S2 from the monitor detectors MD1 and MD2 in order to control the operational point of the Mach-Zehnder modulator MZI1 via a control signal CS2. To this end, the Mach-Zehnder modulator MZI1 may be equipped with phase shifters that are controlled by the control unit CU through this control signal CS2.

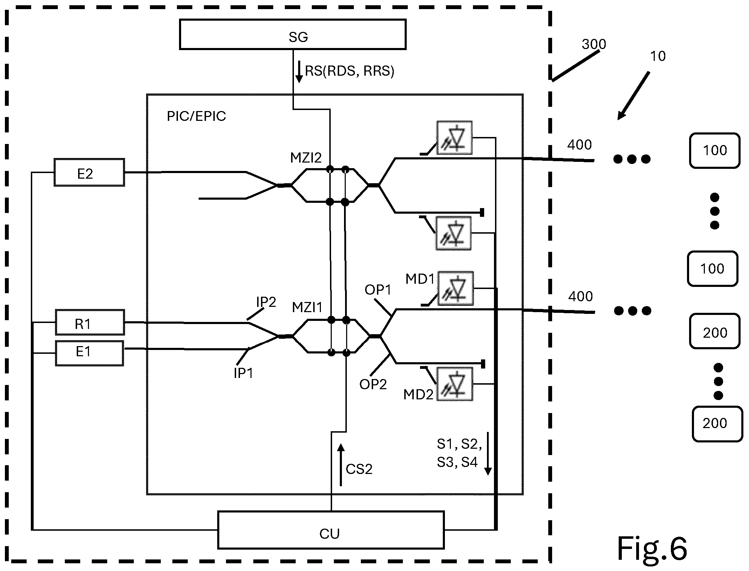

In addition to the optical emitter E1, hereinafter referred to as first optical emitter E1, the central unit 300 may comprise further optical emitters and further Mach-Zehnder modulators that may be connected to other subgroups of the transmission and reception units 200/300 of the radar system 10. Figure 6 shows one of such further optical emitters, hereinafter referred to as second optical emitter E2, and one of such further Mach-Zehnder modulators, hereinafter referred to as second Mach-Zehnder modulator MZI2, in an exemplary fashion. Monitor detectors assigned to the second Mach-Zehnder modulator MZI2 generate further monitor signals S3 and S4.

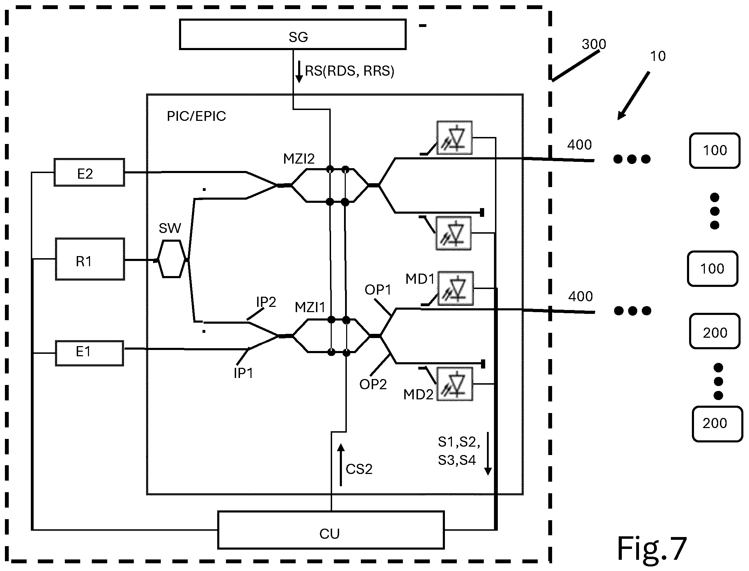

Figure 7 depicts another exemplary embodiment of a central unit 300 according to the present invention. The central unit 300 of Figure 7 comprises an additional switch SW. The additional switch SW is connected to the control unit CU via a control line (not shown in Figure 7) and allows the control unit CU to replace either the first or second optical emitter E1/E2 when the monitor signals S1-S4 indicate a failure of one of these optical emitters E1/E2.

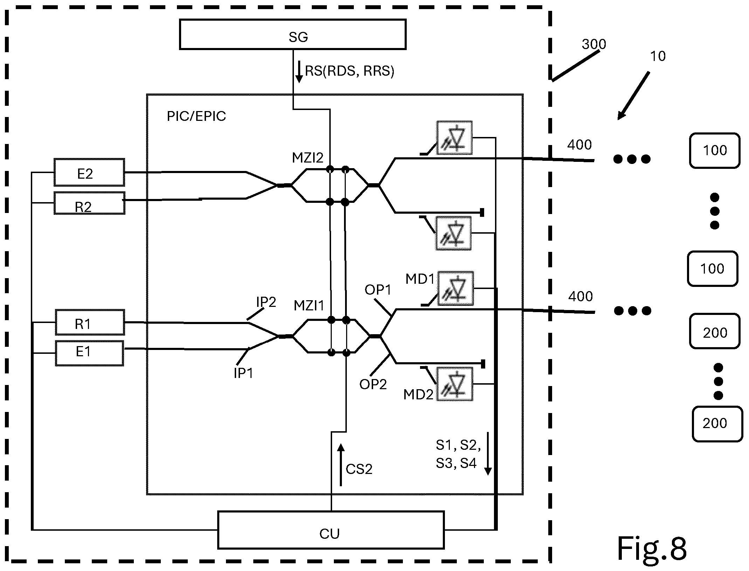

Figure 8 depicts yet another exemplary embodiment of a central unit 300 according to the present invention. The central unit 300 of Figure 8 comprises an additional replacement emitter R2 that is assigned to the second optical emitter E2 and connected to the second Mach-Zehnder modulator MZI2. The additional replacement emitter R2 is controlled by the control unit CU and allows the control unit CU to replace both the second optical emitter E2 with the second replacement emitter R2 and the first optical emitter E1 with the first replacement emitter R1 when the monitor signals indicate a failure of one of these optical emitters E1/E2.

In the exemplary embodiments shown in Figures 1-7, the Mach-Zehnder modulators and the monitor detectors are preferably integrated inside a PIC (photonic integrated chip) or EPIC (electronic photonic integrated chip). The signal generator SG and the control unit CU may also be integrated inside said PIC or EPIC.

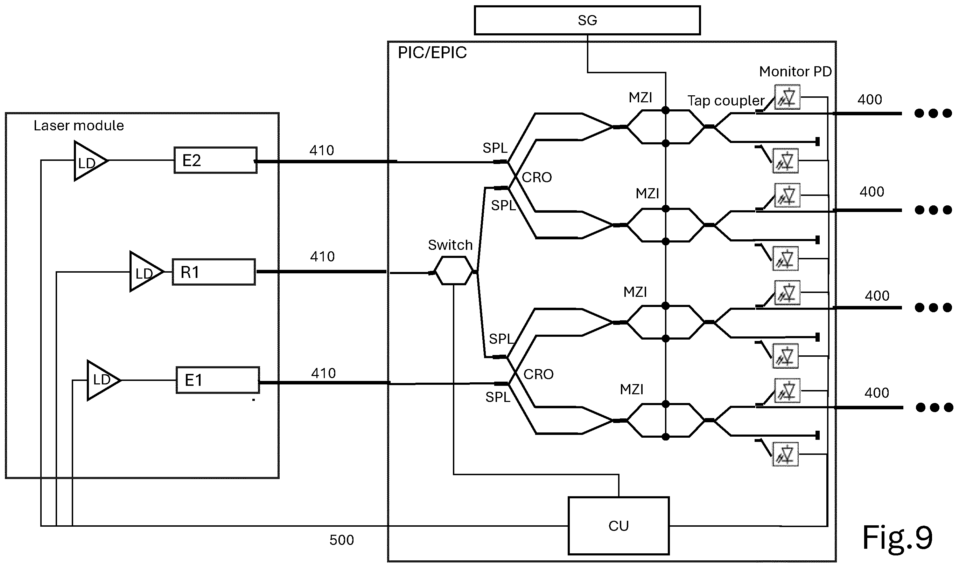

Figure 9 depicts yet another exemplary embodiment of a central unit 300 according to the present invention. In contrast to the embodiment shown in Figure 7, the central unit 300 comprises two or more Mach-Zehnder modulators MZI per optical emitter E1 and E2. In order to distribute the radiation, the central unit 300 comprises additional splitters SPL and crossings CRO. Apart from that, the explanations provided above with reference to Figures 1-8 apply correspondingly.

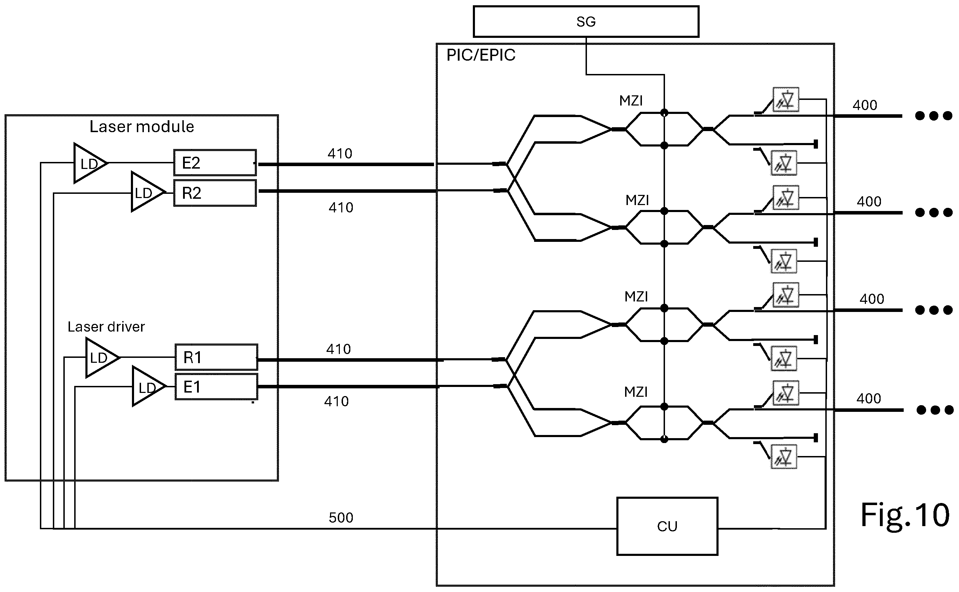

Figure 10 depicts yet another exemplary embodiment of a central unit 300 according to the present invention. In contrast to the embodiment shown in Figure 8, the central unit 300 comprises two or more Mach-Zehnder modulators MZI per optical emitter E1 and E2. In order to distribute the radiation, the central unit 300 comprises additional splitters and crossings. Apart from that, the explanations provided above with reference to Figures 1-8 apply correspondingly.

In the exemplary embodiments shown in Figures 9-10, the Mach-Zehnder modulators, the monitor detectors and the control unit CU are preferably integrated inside a PIC (photonic integrated chip) or EPIC (electronic photonic integrated chip). The signal generator SG may also be integrated inside said PIC or EPIC.

The optical emitters E1 and E2, the replacement emitters R1 and R2 as well as their laser drivers LD are preferably located in a remote laser module.

The laser module is preferably optically connected to the downstream optical components (e.g. PIC or EPIC) via optical fibers 410. The control unit CU is preferably electrically connected to the laser module and its laser drivers LD via one or more electrical wires 500. The remote laser module may be replaced without modifying the PIC or EPIC by simply disconnecting the laser module from the fibers 410 and the electrical wires 500 and connecting a new replacement laser module to the fibers 410 and the electrical wires 500.

It is apparent that the number of optical emitters and replacement emitters may differ from what is shown in Figures 1-10. More specifically, there may be more than two optical emitters and more than two replacement emitters. The replacement emitters may be individually assigned to the optical emitters, as shown in the Figures. Alternatively, there may be a pool of replacement emitters that are not assigned to one or more specific optical emitters prior to failure. In other words, there does not need to be a predefined assignment of optical emitters and replacement emitters. The assignment may vary depending on the sequence in which the optical emitters fail. In the latter case, the central unit 300 is preferably provided with an optical switch board having sufficient optical switches, splitters and crossings that allow the required routing of the optical radiation in case of failure.

In the embodiments described above, the optical emitters and the replacement emitters are preferably lasers. The optical emitters and the replacement emitters are preferably identical or at least of the same type.

In the embodiments described above, the optical emitters and the replacement emitters are preferably connected to their assigned electro-optical modulator via an individually assigned fiber 410. If any of these fibers 410 is broken or disconnected from their emitter or downstream components, the control unit CU may replace the concerned fiber by replacing the respective emitter.

The control unit CU is preferably an electronic circuit, for instance on CMOS basis. The control unit CU may be a microprocessor, an ASIC or any other sort of controller known in the art.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

Furthermore, the terms 'first,' 'second,' 'third,' and so on are used to distinguish between items of the same kind. However, none of these terms imply a specific number of such items. These terms do not imply that all such entities items must be present. For example, the 'first' and 'fourth' items may be present even if the 'second' and 'third' are absent."

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one ore more) of the present dependent claims (regardless of the present claim structure). Therefore, the applicant may direct further patent claims towards other claim combinations at a later stage of the prosecution.

## Claims

1. Central unit (300) for a radar system (10), the central unit (300) being configured to be connected to a plurality of radar transmission units (100) and a plurality of radar reception units (200), wherein the central unit (300) comprises an electro-optical modulator (MZI, MZI1, MZI2), an optical emitter (E1, E2), and an electrical signal generator (SG),
**characterized in that**
the electrical signal generator (SG) is configured to generate an electrical ramp signal (RS) that controls the electro-optical modulator (MZI, MZI1, MZI2) and serves as a radar driver signal (RDS) for the radar transmission units (100) and a radar reference signal (RRS) for the radar reception units (200),
wherein the frequency of the periodic electrical ramp signal (RS) continuously increases or decreases over time at least during an active segment of each periodic cycle,
wherein in response to the ramp signal (RS) the electro-optical modulator (MZI, MZI1, MZI2) modulates radiation of the optical emitter (E1, E2), thereby incorporating the ramp signal (RS) into the optical radiation and outputting modulated optical radiation,
wherein the central unit (300) further comprises a replacement emitter (R1, R2), a monitor detector coupled to an output port of the electro-optical modulator (MZI, MZI1, MZI2), and a control unit (CU), and
wherein the control unit (CU) is configured to evaluate the monitor signal from the monitor detector and to replace the optical emitter (E1, E2) with the replacement emitter (R1, R2) based on the result of the evaluation.

2. Central unit (300) of claim 1,
**characterized in that**
the monitor detector is tap-coupled to the output port.

3. Central unit (300) of any of the preceding claims, **characterized in that**
the electro-optical modulator (MZI, MZI1, MZI2) is a Mach-Zehnder modulator having a first optical input port coupled to the optical emitter (E1, E2), a second optical input port coupled to the replacement emitter (R1, R2), a first optical output port that outputs a first modulated optical output signal, and a second output port that outputs a second modulated optical output signal,
wherein the first and second modulated optical output signal are complementary to each other.

4. Central unit (300) of claim 3,
**characterized in that**
a first monitor detector monitors the first modulated optical output signal and generates a first monitor signal,
a second monitor detector monitors the second modulated optical output signal and generates a second monitor signal, and
the control unit (CU) is configured to evaluate the first and second monitor signal and to replace the optical emitter (E1, E2) with the replacement emitter (R1, R2) if the sum of the amplitudes of the monitor signals is below a given threshold.

5. Central unit (300) of any of the preceding claims 3-4, **characterized in that**
the first monitor detector is tap-coupled to the first optical output port.

6. Central unit (300) of any of the preceding claims 3-5, **characterized in that**
the second monitor detector is tap-coupled to the second optical output port.

7. Central unit (300) of any of the preceding claims 3-5, **characterized in that**
the second monitor detector forms an optical sink at the second optical output port.

8. Central unit (300) of any of the preceding claims 3-7, **characterized in that**
the control unit (CU) is also configured to adjust the operational point of the Mach-Zehnder modulator on the basis of the monitor signals.

9. Central unit (300) of any of the preceding claims, **characterized in that**
the central unit (300) comprises a plurality of optical emitters (E1, E2), each of which is individually assigned to one or more electro-optical modulators (MZI, MZI1, MZI2), and
each electro-optical modulator (MZI, MZI1, MZI2) is individually assigned to at least one monitor detector that monitors an output port of the respective electro-optical modulator (MZI, MZI1, MZI2) and generates a monitor signal.

10. Central unit (300) of claim 9,
**characterized in that**
the replacement emitter (R1, R2) is a single replacement emitter (R1, R2) and assigned to said plurality of optical emitters (E1, E2), and
the control unit (CU) is configured to evaluate the monitor signals from the monitor detectors and to replace any of the optical emitters (E1, E2) of said plurality of optical emitters (E1, E2) with the replacement emitter (R1, R2) if the monitor signals that refer to the respective optical emitter (E1, E2), meet a given replacement condition.

11. Central unit (300) of claim 9,
**characterized in that**
the central unit (300) comprises a plurality of replacement emitters (R1, R2), and
the control unit (CU) is configured to evaluate the monitor signals from the monitor detectors and to replace each of the optical emitters (E1, E2) of said plurality of optical emitters (E1, E2) with any of said plurality of replacement emitters (R1, R2) if the monitor signals that refer to the respective optical emitter (E1, E2), meet a given replacement condition and an unused replacement emitter (R1, R2) is still available.

12. Central unit (300) of claim 9,
**characterized in that**
one or at least one replacement emitter (R1, R2) of a plurality of replacement emitters (R1, R2) is assigned to each optical emitter (E1, E2), and
the control unit (CU) is configured to evaluate the monitor signals from the monitor detectors and to replace each of the optical emitters (E1, E2) with their assigned replacement emitter (R1, R2) if the monitor signals that refer to the respective optical emitter (E1, E2), meet a given replacement condition.

13. Central unit (300) of any of the preceding claims, **characterized in that**
the control unit (CU) is configured to evaluate the monitor signals from the monitor detectors and to replace each replacement emitter (R1, R2) with another replacement emitter (R1, R2) if the monitor signals that refer to the former replacement emitter (R1, R2), meet a given replacement condition.

14. Central unit (300) of any of the preceding claims, **characterized in that**
each of the electro-optical modulators (MZI, MZI1, MZI2) is a Mach-Zehnder modulator having a first optical input port coupled to its assigned optical emitter (E1, E2), a second input port coupled to one or more replacement emitters (R1, R2), and a second output that outputs a second modulated optical output signal,
wherein the first modulated optical output signal of each electro-optical modulator (MZI, MZI1, MZI2) is complementary to the second modulated optical output signal of the respective electro-optical modulator (MZI, MZI1, MZI2).

15. Radar system comprising a plurality of radar transmission units (100), a plurality of radar reception units (200), and a central unit (300) which is optically connected to the radar transmission units (100) and the radar reception units (200),
**characterized in that**
the central unit (300) is a central unit (300) according to any of the preceding claims.
